# EUROPÄISCHE PATENTANMELDUNG

(11) **EP 4 310 377 A1**
(43) Veröffentlichungstag der Anmeldung: **24.01.2024**
(21) Anmeldenummer: 23401020.5
(22) Anmeldetag: 10.07.2023
(51) Int. Cl.: F16L 5/10, E04G 15/06

(54) **KAMMDICHTUNG UND VERFAHREN HIERZU**

(30) Priorität: 21.07.2022 DE 102022118323
(71) Anmelder: Wörner, Rainer, 71277 Rutesheim (DE); WAGRO Systemabdichtungen GmbH, 44137 Dortmund (DE)
(72) Erfinder: Wörner, Rainer, 71277 Rutesheim (DE); Wack, Holger, 44137 Dortmund (DE); Groß, Hans-Jürgen, 42929 Wermelskirchen (DE)
(74) Vertreter: Sebastian, Jens

(57) **Zusammenfassung**

Der Gegenstand der vorliegenden Erfindung betrifft eine Abdichtungsmatte (100) zur Abdichtung einer Durchführung, insbesondere zur Abdichtung einer Rohrdurchführung (10), umfassend einen flächigen Basiskörper (110), der sich über eine Basisebene erstreckt, mit einer Oberseite (111) und einer Unterseite (112), wobei zumindest von einer der beiden Seiten quer zu der Basisebene rippenartig Dichtungsvorsprünge oder Dichtungsstege (120) abragen, wobei die Dichtungsvorsprünge oder Dichtungsstege (120) zu einer durch ein Zentrum (Z) der Basisebene senkrecht abragenden Mittellinie radial unterschiedlich beabstandet sind, sodass zwischen den Dichtungsvorsprüngen oder Dichtungsstegen (120) eine Durchführung (10) abdichtend aufnehmbar ist. Zudem betrifft die Erfindung ein Abdichtungsverfahren hierzu.

## Beschreibung

Die Erfindung betrifft eine Abdichtungsmatte zur Abdichtung einer Durchführung, insbesondere zur Abdichtung einer Rohrdurchführung gemäß Anspruch 1.

Auch betrifft die Erfindung eine abgedichtete Rohrdurchführung, umfassend ein Rohr und eine Abdichtungsmatte gemäß Anspruch 7.

Nicht zuletzt betrifft die Erfindung ein Verfahren zur Abdichtung einer Durchführung, insbesondere zur Abdichtung einer Rohrdurchführung gemäß Anspruch 9.

Aus dem Stand der Technik sind allgemein Rohrdichtungen, Dichtungsringe etc. bekannt. Die bekannten Dichtungen sind für einen bestimmten Rohrdurchmesser ausgelegt.

Es ist eine Aufgabe der vorliegenden Erfindung, eine Abdichtungsmatte, eine abgedichtete Rohrdurchführung und ein Verfahren zur Abdichtung einer Durchführung zu schaffen, welche eine einfache Abdichtung für verschiedene Rohrdurchmesser erleichtert.

Diese und weitere Aufgaben werden gelöst durch eine Abdichtungsmatte nach Anspruch 1, eine abgedichtete Rohrdurchführung nach Anspruch 7 und ein Verfahren nach Anspruch 9.

Die Erfindung schließt die technische Lehre ein, dass bei einer Abdichtungsmatte zur Abdichtung einer Durchführung, insbesondere zur Abdichtung einer Rohrdurchführung, umfassend einen flächigen Basiskörper, der sich über eine Basisebene erstreckt, mit einer Oberseite und einer Unterseite, vorgesehen ist, dass zumindest von einer der beiden Seiten quer zu der Basisebene Dichtungsvorsprünge oder Dichtungsstege abragen, wobei die Dichtungsvorsprünge oder Dichtungsstege zu einer durch ein Zentrum der Basisebene bzw. des Basiskörpers oder der Abdichtungsmatte senkrecht abragenden Mittellinie radial unterschiedlich beabstandet sind, sodass zwischen den Dichtungsvorsprüngen oder Dichtungsstegen eine Durchführung abdichtend aufnehmbar ist. Ein Zentrum der Basisebene ist insbesondere das Zentrum eines für eine Durchführung vorgesehenen Bereichs, somit einer späteren Ausnehmung.

Die Abdichtungsmatte ist zur Abdichtung von Rohrdurchführungen mit unterschiedlichen äußeren Abmaßen wie Außendurchmesser oder Außenumfang vorgesehen. Die Rohrdurchführungen können dabei in Querschnittsrichtung unterschiedliche Formen aufweisen. Beispielsweise kann die Rohrdurchführung rotationssymmetrisch (ring- oder kreisförmig) oder nicht rotationssymmetrisch (oval, quadratisch, rechteckig, polygon), zumindest in Bezug auf seine Außenkontur ausgeführt sein.

Der Basiskörper weist für die Rohrdurchführung einen Bereich für eine Durchgangsöffnung, eine Durchgangsöffnung oder eine vorbereitete Durchgangsöffnung auf, durch welche ein Rohr durchführbar ist. Dabei können Mittel zur Vereinfachung der Herstellung der Durchgangsöffnung vorgesehen sein, beispielsweise in Form von Schnitt- oder Stanzhilfen. Derartige Mittel können Nuten, Vertiefungen, Perforationen, Markierungen, Vorsprünge und dergleichen umfassen. Im Folgenden werden nur Durchgangsöffnung oder Aussparungen aufgeführt, wobei, wenn nicht ausdrücklich anders ausgeführt, davon auch vorbereitete Durchgangsöffnungen oder Aussparung oder Bereiche für Durchgangsöffnungen umfasst sein können.

Mit den Mitteln zur Herstellung der Durchgangsöffnungen lässt sich eine Durchgangsöffnung auf einfache Weise nachträglich herstellen. Für verschieden große Durchgangsöffnung sind entsprechend verschiedene Mittel zur Herstellung von Durchgangsöffnungen vorgesehen. Diese Mittel zur Herstellung von Durchgangsöffnungen lassen sich im Herstellungsprozess der Abdichtungsmatte schon früh, also vor Bekanntsein der Abmaße der abzudichtenden Rohrdurchführung herstellen. Die Durchgangsöffnung selber - also ohne Mittel - lässt sich erst nach Bekanntsein der Abmaße der Durchgangsöffnung herstellen. Vorzugsweise ist die Abdichtungsmatte für hohlzylindrische Rohre vorgesehen, sodass die Durchgangsöffnung vorzugsweise einen kreisförmigen Querschnitt aufweist.

Die Durchgangsöffnung ist vorzugsweise zentrisch angeordnet. Die Kontur der Durchgangsöffnung korrespondiert zu der Außenkontur des aufzunehmenden Rohrs.

Der flächige Basiskörper ist bevorzugt scheibenartig oder mattenartig ausgebildet und kann in einer Draufsicht eine beliebige (Querschnitts-)Form aufweisen. Entsprechend weist der Basiskörper in eine Raum-Richtung eine deutlich kleinere Dimension auf, als in die beiden anderen Raumrichtungen. Vorzugsweise ist die Abmessung in Richtung der Raumrichtung mit der kleinsten Dimension, d.h. in Richtung der Basiskörperdicke, konstant ausgebildet. In anderen Ausführungsformen ist die Basiskörperdicke variabel bzw. unterschiedlich ausgebildet.

Das Material des Basiskörpers ist vorzugsweise ein elastisches Material, welches für eine Abdichtung, insbesondere eine Abdichtung gegen Wasser, geeignet ist. Insbesondere ist der Basiskörper aus einem bauwerksabdichtenden Material hergestellt. Weiter bevorzugt ist das Basiskörpermaterial ein Material, das für Durchdringungen oder Rohrdurchführungen geeignet ist. Dies können geeignete Kunststoff-, Gummi-, Silikon- und/oder quellfähige Materialien sein. Die Materialien können allgemein quellfähige Materialien und/oder nicht quellfähige Materialien sein. Als Materialien kommen grundsätzliche alle Materialien zur Anwendung, die formgebend verarbeitbar sind. Vorzugsweise werden teilvernetzte und/oder komplett vernetzte Elastomermaterialien oder thermoelastische Elastomere (TPE) verwendet, die durch organische oder anorganische Additive quellfähig eingestellt sind. Quellfähige Additive sind hierbei vorzugsweise teilneutralisiertes Polyacrylat und/oder Betonite.

Für die zuverlässige Abdichtung von Rohrdurchführungen kommen für die Abdichtungsmatte und/oder die Dichtungsstege oder Dichtungsvorsprünge vorzugsweise Werkstoffe aus den Klassen der Elastomere, Thermoplaste, thermoplastischen Elastomere und Duroplaste in Betracht, vorzugsweise Materialien aus der Klasse der Thermoplastischen Elastomere. Die Fertigung der Vorsprünge oder Stege, die bei der Abdichtung als Dichtungsring fungieren, kann mit Methoden der Gummi- und/oder Thermoplast- und/oder Duroplastverarbeitung erfolgen, beispielsweise mittels Extrusion, Spritzgießen, Pressen etc. Vorzugsweise erfolgt die Herstellung mittels Spritzgießen.

Das Material für die Abdichtungsmatte und/oder für die Dichtungsstege oder Dichtungsvorsprünge weist eine geeignete Härte, insbesondere ein Shorehärte auf. Zur Bestimmung, Definition und Charakterisierung der Shorehärte dient die DIN ISO 7619-1, Elastomere oder thermoplastische Elastomere - Bestimmung der Eindringhärte - Teil 1: Durometer-Verfahren (Shore-Härte). Die Shorehärte der Abdichtung liegt vorzugsweise im Bereich 20 bis 85 Shore A, weiter bevorzugt im Bereich 40 bis 70 Shore A.

Für eine geeignete Abdichtungsfunktion weist das Material für die Abdichtungsmatte und/oder die Dichtungsstege oder Dichtungsvorsprünge - oder auch Dichtungsringe - eine geeignete Dehnung oder Dehnfähigkeit auf. Zur Bestimmung, Definition und Charakterisierung der Dehnung dient die DIN EN ISO 527, Kunststoffe - Bestimmung der Zugeigenschaften - Teil 2: Prüfbedingungen für Form- und Extrusionsmassen. Zur Montage der Abdichtung ist ein ausreichendes Dehnvermögen des Materials notwendig. Die Bruchdehungen der Materialien liegen vorzugsweise im Bereich von 50 bis 800%, weiter bevorzugt im Bereich von 150 bis 450%.

Die Materialen für die Abdichtungsmatte und/oder Dichtungsvorsprünge oder Dichtungsstege weisen einen geeigneten Druckverformungsrest auf. Zur Bestimmung, Definition und Charakterisierung des Druckverformungsrests dient die DIN ISO 815-1, Elastomere oder thermoplastische Elastomere - Bestimmung des Druckverformungsrestes - Teil 1: Bei Umgebungstemperaturen oder erhöhten Temperaturen. Aufgrund des quellförmig eingestellten Charakters der Abdichtung (Quellung und Volumenvergrößerung bei Wasserkontakt) kann der Bereich des Druckverformungsrests auch hohe bzw. höhere Werte annehmen. Der Druckverformungsrest liegt vorzugsweise im Bereich von 0 bis 95% (24 h, 23 °C), weiter bevorzugt im Bereich von 0 bis 40% (24 h, 23 °C).

Die Materialien für die Abdichtungsmatte und/oder Dichtungsvorsprünge oder Dichtungsstege weisen geeignete Quellungseigenschaften auf. Das Material für die Abdichtung (Basiskörper, Stege, Vorsprünge, Abdichtungsringe) umfasst bzw. besteht aus einem quellfähigen Material. Entsteht eine Leckage, gelangt Flüssigkeit (z. B. Wasser aus dem Erdreich) an die Abdichtung. Diese quillt unter Flüssigkeitseinlagerung auf, vergrößert dadurch ihr Volumen und dichtet die entstandene Leckage dadurch sicher, eigenständig und dauerhaft wieder ab. Zur Bestimmung, Definition und Charakterisierung der Quelllung dient die Methode der Flüssigkeitsaufnahme bei freier Quellung (Free Swelling Capacity - FSC-Wert). Bei dieser Methode wird eine Werkstoffprobe in Flüssikgeit eingelegt und kann ohne Einschränkung des Quellungsvorgangs aufqeullen. Bestimmt wird die relative Massenzunahme der Werkstoffprobe in Abhängigkeit der Zeit. Die relative Massenzunahme ist definiert als aufgenomme Flüssigkeitsmasse bezogen auf die trockene Probenmasse und wird in Prozent angegeben. Eine relative Flüssigkeitsaufnahme von 100% entspricht somit einer Verdopplung der trockenen Probenmasse. Die Abdichtung weist relative Massenzunahmen, im Quellungsgleichgewicht, von vorzugsweise 10 bis 800% auf, weiter bevorzugt relative Massenzunahmen von 50 bis 125%. Das Quellungsgleichgewicht wird vorzugsweise nach 5 bis 500 Stunden erreicht, weiter bevorzugt wird das Quellungsgleichgewicht nach 10 bis 72 Stunden erreicht.

Insbesondere ist das Material, aus dem die Abdichtungsmatte und/oder die Dichtungsvorsprünge und/oder Dichtungsstege hergestellt ist, ausgewählt aus der Gruppe umfassend Elastomere, Thermoplaste, thermoplastische Elastomere und Duroplaste. Vorzugsweise werden Materialien aus der Klasse der thermoplastischen Elastomere verwendet.

Der Basiskörper weist eine Oberseite und eine gegenüberliegende Unterseite auf. Zumindest an einer Seite ragen in einer Ausführungsform von dem Basiskörper Dichtungsstege oder Dichtungsvorsprünge - im Folgenden Stege - quer ab. Die Stege können in einem beliebigen Winkel quer von dem Basiskörper, genauer einer Seite des Basiskörpers, beispielsweise der Oberseite, abragen. Bevorzugt ragen die Stege im Wesentlichen rechtwinklig oder in einem Winkel von größer 60 Grad, vorzugsweise größer 70 Grad und am meisten bevorzugt größer 80 Grad und/oder kleiner 120 Grad, vorzugsweise kleiner 110 Grad und am meisten bevorzugt kleiner 100 Grad von der entsprechenden Seite ab.

Die mehreren Dichtungsstege können miteinander verbunden sein und in axiale Richtung der gedachten Mittellinie durch das Zentrum aneinander angrenzend angeordnet sein. Die Dichtungsstege können aber auch in Richtung der Haupterstreckung des Basiskörpers, somit rechtwinklig zu der gedachten Mittellinie, somit radial voneinander beabstandet ausgeführt sein.

Hierbei kontaktieren sich die einzelnen Stege nicht, sondern kontaktieren ausschließlich den Basiskörper. Eine Kombination von miteinander angrenzenden und sich nicht kontaktierenden Stegen ist ebenfalls in einer Ausführungsform vorgesehen.

Somit sind die Stege in einer Ausführungsform als voneinander beabstandete Stege oder Stegringe ausgebildet, die von einer Seite des Basiskörpers abragen. In einer anderen Ausführungsform sind die Stege als aneinander angrenzende oder benachbarte Stege oder Stegringe ausgebildet. Bei der Ausführungsform, in welcher sich die Stege nicht kontaktieren, ist ein radialer Abstand zwischen den Stegen vorgesehen. Horizontal sind die Stege auf einer Ebene - dem Basiskörper - angeordnet. In einer anderen Ausführungsform weisen die Stege sowohl einen radialen Versatz zueinander auf und sind axial unterschiedlich beabstandet zu dem Basiskörper angeordnet. Zwischen benachbarten Stegen kann ein Übergangsabschnitt oder Zwischenabschnitt vorgesehen sein.

In einer anderen Ausführungsform bilden die Dichtungsstege eine Polygonform, zumindest in einer Seiten- oder Querschnittsansicht, aus. Hierbei grenzt ein Dichtungssteg mit einem ersten radialen Abstand zu der Mittellinie an einen daran anschließenden anderen Dichtungssteg mit einem anderen radialen Abstand an. Der nächste Dichtungssteg mit wiederum einem anderen radialen Abstand grenzt an den vorherigen Dichtungssteg an, sodass sich in axiale Richtung der Mittellinie eine Art Polygon, Pyramiden- oder Kegelform ergibt. Die Übergange der Dichtungsstege können kontinuierlich oder sprunghaft sein. Bei einem kontinuierlichen Übergang sind auch die radialen Abstände der Dichtungsstege sich kontinuierlich ändernd ausgeführt. Es entsteht eine sprungfreie Mantelfläche oder Außenseite. In einer anderen Ausführungsform sind zwischen den Dichtungsstegen oder genauer Dichtungsabschnitten Zwischenabschnitte oder Übergangsabschnitte vorgesehen. Diese ragen von einem Ende eines Dichtungsstegs winklig ab. In den anderen Dichtungsstege mündet der Übergangsabschnitt winklig. Der Winkel kann in einer Ausführungsform ein rechter Winkel sein. In einer anderen Ausführungsform ist ein anderer Winkel vorgesehen. Ein darauffolgender Dichtungssteg ragt von dem Übergangsabschnitt ebenfalls winklig ab. Hierdurch können zumindest zwei Dichtungsstege, in einer Ausführungsform auch alle Dichtungsstege, senkrecht zu dem Basiskörper ausgeführt sein, während die Übergangsabschnitte zwischen zwei benachbarten Dichtungsstegen in einem Winkel ungleich 90 Grad oder gleich 90 Grad zu dem Basiskörper angeordnet sind. Bei einer kontinuierlichen Ausführungsform sind die Stege in einem Winkel ungleich 90°zu dem Basiskörper angeordnet, stehen als geneigt zu dem Basiskörper von diesem ab. Hierbei liegt dann eine geringere Dichtungsfläche des Dichtungsstegs an einem durchgeführten Rohr an, welches senkrecht durch den Basiskörper geführt ist. Bei einer Ausführung mit 90° abragenden Dichtungsstegen, liegt zumindest nahezu der gesamte Dichtungssteg mit einer Innenseite an dem durchgeführten Rohr an. Sofern ein Übergangsabschnitt vorgesehen ist, liegt dieser nicht an dem durchgeführten Rohr an.

Bei einer axialen Aneinanderreihung der Dichtungsstege weist der direkt von dem Basiskörper abragende Dichtungssteg den größten radialen Abstand von der Mittellinie durch das Zentrum auf. Die daran in axialer Richtung anschließenden Dichtungsstege und/oder Übergangsabschnitte weisen mit wachsender axialer Entfernung von dem Basiskörper kleiner werdende oder sich verjüngende radiale Abstände von der Mittellinie auf.

Die Dichtungsstege selber sind in einer Ausführungsform in Richtung des Abragens gleich lang dimensioniert, weisen somit in Erstreckungsrichtung und/oder quer zur Erstreckungsrichtung die gleiche Länge auf. In anderen Ausführungsformen sind zumindest zwei Stege unterschiedlich lang in Erstreckungsrichtung und/oder quer zur Erstreckungsrichtung dimensioniert. Beispielsweise können in einer Ausführungsform auch sämtliche Stege unterschiedlich in Erstreckungsrichtung und/oder quer zur Erstreckungsrichtung dimensioniert sein. Die Erstreckungsrichtung ist bevorzugt die axiale Richtung (der Mittellinie).

Die Stege weisen eine Materialdicke auf. Diese ist in einer Ausführungsform entlang der Erstreckungsrichtung konstant ausgebildet. In anderen Ausführungsformen kann die Materialdicke entlang der Erstreckungsrichtung variieren, sich beispielsweise verjüngen. In einer Ausführungsfrom weisen sämtliche Stege die gleiche Materialdicke und/oder den gleichen Materialdickenverlauf entlang der Erstreckungsrichtung auf. In anderen Ausführungsformen variiert die Materialdicke entlang der Erstreckungsrichtung zwischen zumindest zwei Stegen. In einer Ausführungsform weisen die Stege für eine Entformung in einem Fertigungsverfahren wie das Spritzgießen, eine geeignete Form auf, beispielsweise ein Verjüngung in Richtung weg von dem Basiskörper. Diese für die Entformung vorgesehene Verjüngung kann sowohl bei Stegen mit ansonsten konstanter Materialdicke als auch bei Stegen mit zumindest teilweise variierender Materialdicke vorgesehen sein.

Die Stege sind in einer Ausführungsform zumindest radial zueinander beabstandet - horizontal oder in Basiskörper-Ebene oder vertikal oder axial bei vorhandenen Übergangsabschnitten. Zumindest weisen die Stege radial zu der Mittelachse eine unterschiedliche Entfernung auf. In einer Ausführungsform sind die Stege zueinander und/oder zu der Mittelachse radial äquidistant beabstandet. In einer anderen Ausführungsform sind die Stege untereinander und/oder zu der Mittelachse radial unterschiedlich zueinander beabstandet. Bevorzugt sind zumindest zwei der Stege radial zueinander und/oder radial zu einer Mittelachse unterschiedlich beabstandet. Der Abstand der Stege oder Abschnitte der Stege radial zueinander und/oder zu der Mittelachse ist zumindest so bemessen, dass zwischen den Stegen ein Rohr aufgenommen werden kann. Das heißt, der radiale Abstand zweier benachbarter Stege und/oder zu der Mittelachse ist zumindest so groß, wie die Wandstärke eines aufzunehmenden Rohres. Bei einer kontinuierlichen axialen Ausrichtung gilt dies für Abschnitte des jeweiligen Dichtungsstegs.

In einer Ausführungsform sind die Dichtungsvorsprünge oder Dichtungsstege separat mit dem Basiskörper über entsprechende Verbindungsmittel verbunden.

In einer Ausführungsform ist vorgesehen, dass die Dichtungsvorsprünge oder Dichtungsstege und der Basiskörper zumindest teilweise einteilig oder zumindest teilweise mehrteilig miteinander ausgebildet sind. Bevorzugt ist eine einteilige Ausführungsform der Abdichtungsmatte.

In einer Ausführungsform sind die Dichtungsvorsprünge oder Dichtungsstege und der Basiskörper einteilig miteinander ausgebildet. In einer anderen Ausführungsform sind die Dichtungsvorsprünge oder Dichtungsstege und der Basiskörper mehrteilig miteinander ausgebildet. In noch einer anderen Ausführungsform sind die Dichtungsvorsprünge oder Dichtungsstege und der Basiskörper zumindest teilweise einteilig und zumindest teilweise mehrteilig miteinander ausgebildet.

Das Stegmaterial entspricht bei einer einteiligen Ausbildung mit dem Basiskörper dem Basiskörpermaterial. Bei einer zumindest teilweise mehrteiligen Ausbildung von Stegen oder Vorsprüngen und Basiskörper können die Materialien für Stege oder Vorsprünge und Basiskörper zumindest teilweise gleich oder zumindest teilweise unterschiedlich ausgebildet sein. Die Vorsprünge oder Stege lassen sich lösbar - zerstörungsfrei oder mit zumindest teilweiser Zerstörung - oder unlösbar, das heißt nur mit Zerstörung von zumindest Teilen des Basiskörpers und des Stegs oder des Vorsprungs, mit dem Basiskörper verbinden. Die Verbindung kann beliebig sein. In einer Ausführungsform ist die Verbindung stoffschlüssig ausgeführt, beispielsweise mittels Verkleben. In anderen Ausführungsformen ist die Verbindung formschlüssig ausgebildet. In noch einer anderen Ausführungsform ist die Verbindung kraftschlüssig ausgebildet. Auch sind Kombinationen hiervor möglich. Bei einer mehrteiligen Verbindung lassen sich nachträglich weitere Stege oder Vorsprünge mit dem Basiskörper aufbringen oder von diesem lösen.

Noch eine weitere Ausführungsform sieht vor, dass der Basiskörper scheibenartig oder mattenart, beispielsweise als Bahnmaterial ausgebildet ist. Bevorzugt ist der scheibenartige Basiskörper als Kreisscheibe ausgebildet mit einem in der Draufsicht kreisförmigen Querschnitt. Andere Formen wie Rechtecke, Polygone, Ovale und dergleichen sind ebenfalls möglich.

Zudem ist in einer Ausführungsform vorgesehen, dass die Dichtungsvorsprünge oder die Dichtungsstege umlaufend um ein Zentrum des Basiskörpers ausgebildet sind, so dass diese in einer Draufsicht ringartig und/oder als konzentrische Ringe ausgebildet sind. Das Zentrum des Basisklkörpers ist bevorzugt das Zentrum des Bereichs für die Ausnehmung oder den Durchlass oder der Mittelpunkt oder Schwerpunkt des Bereichs für den Durchlass. Bei eingesetztem Rohr verläuft die Mittelachse deckungsgleich mit der Mittelachse des Rohres. In anderen Ausführungsformen sind die Stege in anderen Formen umlaufend ausgebildet. Bei einer umlaufenden Ausbildung der Stege bei einer horizontalen Ausrichtung weisen die Stege lediglich eine obere Wandung und zwei Seitenwandungen auf. Die Stege bilden eine geschlossene Form, vorzugsweise als Kreisring. Es sind aber auch andere Formen wie Ovale und dergleichen möglich. Die Stege können aber auch als nicht umlaufende Stege, somit als Stegabschnitte ausgebildet sein. Diese weisen dann neben den drei vorstehend aufgeführten Wandungen noch zwei weitere Endwandungen auf. Für die Abdichtung von Rohrdurchführungen sind umlaufende Stege bevorzugt.

Die Stege laufen bevorzugt um ein Zentrum des Basiskörpers oder das Zentrum der Durchführung der Ausnehmung für die Rohrdurchführung. Bei einer Kreisscheibe entspricht diese dem Mittelpunkt der Scheibe. In anderen Ausführungsformen kann dies allgemein der Schwerpunkt oder der Flächenmittelpunkt sein. Bevorzugt bildet das Zentrum den Mittelpunkt oder gedachten Schwerpunkt der Ausnehmung, durch welchen die gedachte axiale Mittellinie verläuft, welche bei einer Rohrdurchführung dann auch auf der Mittelachse des Rohrs liegt.

Zwischen den Stegen, vorzugsweise im oder um ein Zentrum oder um einen Mittelpunkt, ist eine Durchgangsöffnung vorgesehen. Durch die Durchgangsöffnung kann ein Rohr durchgeführt werden. Die Durchgangsöffnung grenzt an einen Steg an bzw. an eine gedachte Fortführung des Stegs. Auf diese Weise realisiert die Dichtungsmatte eine Abdichtung für eine Rohrdurchführung.

Wiederum eine andere Ausführungsform sieht vor, dass auf einer der Seite mit den abragenden Dichtungsvorsprünge oder Dichtungsstege gegenüberliegenden Seite und/oder und/oder der Innenseite und/oder Außenseite der Dichtungsvorsprünge oder Stege und/oder an denen der Übergangsabschnitte Hilfsmittel für das Herstellen einer Durchgangsöffnung oder Aussparung wie Einkerbungen, Materialverdünnungen und/oder Ausnehmungen vorgesehen sind. Vorzugsweise weist der Basiskörper nur auf einer Seite Stege auf, beispielsweise auf der Oberseite. Entsprechend sind die Hilfen oder Hilfsmittel für das Herstellen einer Durchgangsöffnung, wie Einkerbungen, Materialverdünnungen und/oder Ausnehmungen an der Unterseite bei einer Ausführungsform, in der die Stege direkt von dem Basiskörper abragen und/oder an der Innen- und/oder Außenseite der Stege bei einer axialen Ausrichtung der Stege vorgesehen. Die Hilfsmittel sind in einer Ausführungsform versetzt zu der Fortführung der Stege in Richtung Unterseite und/oder Innen- und/oder Außenseite angeordnet. Die Hilfsmittel verlaufen bevorzugt versetzt zu einer Innenwand der Stege. Die Innenwand oder Innenwandung der Stege ist die Wandung, die zu dem Zentrum des Basiskörpers weist. Dabei sind die Hilfsmittel vorzugsweise als umlaufende Hilfsmittel ausgebildet. Das heißt, die Hilfsmittel verlaufen gleich beabstandet versetzt zu der Fortführung der Stege. Die Hilfsmittel sind dabei jeweils näher zu der Innenwandung eines Stegs als zu der Außenwandung des benachbarten Stegs angeordnet. Die Außenwandung eines Stegs liegt gegenüber zu der Innenwandung. Die Hilfsmittel können in einer Ausführungsform auch an den Übergangsabschnitten ausgebildet sein, insbesondere bei einer axialen Ausrichtung der Stege.

Die Form der Hilfsmittel wie Einkerbungen, Materialverdünnungen, Ausnehmungen kann beliebig sein. Vorzugsweise ist das jeweilige Hilfsmittel im Querschnitt in Richtung Steg sich verjüngend zulaufend ausgebildet. In einer bevorzugten Ausführungsform ist die Breite des jeweiligen Hilfsmittel kleiner als der Abstand zu der Fortführung der Innenwandung des Stegs ausgebildet, vorzugsweise etwa halb so groß. Die Hilfsmittel umfassen auch Perforationen oder dergleichen.

Die Erfindung schließt auch die technische Lehre ein, dass bei einer abgedichteten Rohrdurchführung, umfassend ein Rohr und eine Abdichtungsmatte, vorgesehen ist, dass die Abdichtungsmatte nach einem der vorherigen Ansprüche ausgebildet ist, wobei der Basiskörper der Abdichtungsmatte zur Durchführung des Rohrs eine Aussparung oder Durchgangsöffnung entlang einer der Dichtungsvorsprünge oder Dichtungsstege aufweist, und das Rohr seitlich an einen Dichtungsvorsprung oder einen Dichtungssteg angrenzend den Basiskörper durchdringt. Die Abdichtungsmatte weist für die Durchführung eine Aussparung oder Durchgangsöffnung auf. Diese wird durch Herstellen der Durchgangsöffnung, beispielsweise durch Ausschneiden, entlang eines umlaufenden Dichtungsstegs erzeugt. Dabei erfolgt das Herstellen der Durchgangsöffnung, zum Beispiel das Ausschneiden, benachbart entlang einer Innenwandung oder Innenseite des Dichtungsstegs. Die Stege sind vorzugsweise so ausgebildet, dass dies für bestimmte Rohrdurchmesser angepasst sind. Je nach Rohraußendurchmesser erfolgt das Ausschneiden entlang des Dichtungsstegs, der zu dem Außendurchmesser des Rohres korrespondiert. Die Aussparung / Durchgangsöffnung ist entsprechend an die Kontur des Rohres angepasst. Insbesondere ist die Aussparung / Durchgangsöffnung kreisförmig.

In einer bevorzugten Ausführungsform ist vorgesehen, dass die Abdichtungsmatte zu dem Rohr fixiert ist. Beispielsweise ist der an das durchgeführte Rohr angrenzende Dichtungsvorsprung oder Dichtungssteg mittels eines Klemmmittels an das Rohr geklemmt. In einer anderen Ausführungsform sind andere Fixiermittel vorgesehen. Beispielsweise kann die Abdichtungsmatte, vorzugsweise mit dem Dichtungssteg, an das Rohr geklebt sein. Um eine verbesserte Dichtfunktion zu realisieren, ist der Dichtungssteg gegen das Rohr fixiert, beispielsweise geklemmt, geklebt oder anders fixiert. Als Klemmmittel sind beispielsweise Spannringe, Schlauchschellen, Kunststoffspannringe oder dergleichen vorgesehen. Als Klebmittel sind Klebstoffe oder dergleichen vorgesehen. Bei magnetischen Rohren ist auch eine Fixierung mittels Magnetmitteln vorgesehen. Die Dichtungsstege können auch Formschlussmittel aufweisen, die zu einem Formschlussmittels des Rohres korrespondieren.

Die Abdichtungsmatte ist zum Vergießen in Beton ausgebildet. Insbesondere ist die Abdichtungsmatte als Frischbetonverbunddichtungsbahn vorgesehen. Die Abdichtungsmatte wird insbesondere verwendet, um abgedichtete Rohrdurchführungen durch Beton zu realisieren. Durch das Vergießen in Beton wird zudem eine Fixierung der Abdichtungsmatte realisiert.

Die Erfindung schließt weiter die technische Lehre ein, dass bei einem Verfahren zur Abdichtung einer Durchführung, insbesondere zur Abdichtung einer Rohrdurchführung, die Schritte vorgesehen sind: Bereitstellen einer hier beschriebenen Abdichtungsmatte, Vorsehen einer Aussparung oder Durchgangsöffnung entlang eines Dichtungsvorsprungs oder Dichtungsstegs, um so einen Durchlass für die Rohrdurchführung zu realisieren, Durchführen eines Rohres durch die Aussparung bzw. den Durchlass oder die Durchgangsöffnung, wobei das Rohr mit seiner Außenwandung entlang des Dichtungsvorsprungs oder des Dichtungsstegs, entlang dem die Aussparung / Durchgangsöffnung gebildet wird, angrenzt, sodass das Rohr von dem entsprechenden Dichtungsvorsprung oder Dichtungssteg abgedichtet ist.

Das Herstellen oder auch Ausschneiden einer Aussparung oder Rohrdurchführung kann bereits vor dem Bereitstellen oder nach dem Bereitstellen der Abdichtungsmatte erfolgen. Beispielsweise kann eine bereits mit einer Aussparung oder Durchgangsöffnung versehene Abdichtungsmatte bereitgestellt werden. In einer anderen Ausführungsform wird eine Abdichtungsmatte ohne Aussparung oder Durchgangsöffnung bereitgestellt und die Aussparung oder Durchgangsöffnung erst nach Bereitstellen hergestellt oder vorgesehen. Das Herstellen oder Vorsehen kann mit einem beliebigen Verfahren realisiert werden. Beispielsweise lässt sich die Aussparung oder die Durchgangsöffnung durch Ausschneiden, Ausstanzen, Herausdrücken oder beliebig anders realisieren. Für ein vereinfachtes Herstellen der Durchgangsöffnung oder Aussparung kann die Abdichtungsmatte entsprechend vorbereitet werden, beispielsweise durch vorsehen einer Schnitthilfe, Perforierungen oder dergleichen.

Die Aussparung oder Durchgangsöffnung wird in unmittelbarer Nähe zu dem Dichtungssteg oder Dichtungsvorsprung vorgesehen. Dabei kann ein Abstand in der Ebene der Abdichtungsmatte zwischen Aussparung oder Durchgangsöffnung und Dichtungssteg oder Dichtungsvorsprung vorgesehen werden. Der Abstand, insbesondere der radiale Abstand, zwischen Aussparung oder Durchgangsöffnung und Steg oder Vorsprung liegt vorzugsweise in einem Bereich von 0 mm bis 20 mm, weiter bevorzugt von 1 mm bis 15 mm und am meisten bevorzugt von 2 mm bis 10 mm.

In einer Ausführungsform ist vorgesehen, dass die Abdichtungsmatte fixiert wird. Die Abdichtungsmatte kann auf verschiedene Arten fixiert werden. In einer Ausführungsform kann der Dichtungsvorsprung oder der Dichtungssteg, der an die Außenwandung des durchgeführten Rohres angrenzt, mit einem Klemmmittel gegen die Außenwandung des Rohres geklemmt werden. In einer anderen Ausführungsform kann die Abdichtungsmatte fixiert werden. Hierzu kann die Abdichtungsmatte mittels Fixiermitteln fixiert werden, beispielsweise mit stoffschlüssigen, kraftschlüssigen und/oder formschlüssigen Mitteln. In einer Ausführungsform ist die Abdichtungsmatte mittels eines Klebstoffs verklebt. In einer anderen Ausführungsform ist die Abdichtungsmatte in einem Beton vergossen. Die Abdichtungsmatte lässt sich an verschiedenen Stellen fixieren. Dabei kann die Fixierung an dem Steg, an dem Basiskörper - sowohl an der Oberseite als auch an der Unterseite - auch in Kombination, fixiert werden.

Um eine Rohrdurchführung abzudichten, wird eine hier beschriebene Abdichtungsmatte bereitgestellt. Es wird ein zu dem Rohraußendurchmesser korrespondierender Dichtungssteg identifiziert. Die Innenseite des Dichtungsstegs ist benachbart zu der Außenwandung des Rohrs. Entlang des identifizierten Dichtungsstegs wird eine Aussparung oder Durchgangsöffnung in dem Basiskörper erzeugt. Dies erfolgt vorzugsweise durch Ausschneiden. Auf diese Weise wird die Aussparung oder Durchgangsöffnung erzeugt, durch welche das Rohr führbar ist. Das Rohr wird durch die Aussparung / Durchgangsöffnung gesteckt. Dabei wird die Außenwandung entlang der Innenseite des benachbarten Dichtungsstegs geführt. Die Innenseite des Dichtungsstegs kontaktiert dabei bevorzugt die Außenwandung des Rohrs. Auf diese Weise wird eine Abdichtung realisiert. Um die Abdichtung weiter zu verbessern, wird in einer Ausführungsform der Dichtungssteg gegen das Rohr geklemmt. Hierdurch ist eine verbesserte Abdichtung für verschiedene Rohrdurchmesser realisierbar.

Weitere, die Erfindung verbessernde Maßnahmen sind in den Unteransprüchen angegeben oder ergeben sich aus der nachfolgenden Beschreibung von mindestens einem Ausführungsbeispiel der Erfindung, welches in den Figuren schematisch dargestellt ist. Sämtliche aus den Ansprüchen oder der Beschreibung oder der Zeichnung hervorgehenden Merkmale und/oder Vorteile, einschließlich konstruktive Einzelheiten, räumliche Anordnung und Verfahrensschritte können sowohl für sich als auch in den verschiedensten Kombinationen erfindungswesentlich sein. In den Figuren werden gleiche oder ähnliche Bauteile mit gleichen oder ähnlichen Bezugszeichen gekennzeichnet.

Es zeigen:
- Fig. 1: schematisch in einer geschnittenen Seitenansicht eine Ausführungsform einer Abdichtungsmatte mit mehreren in Ebenenrichtung des Basiskörpers angeordneten Stegen,
- Fig. 2: schematisch in einer geschnittenen Seitenansicht eine andere Ausführungsform einer Abdichtungsmatte mit mehreren Stegen,
- Fig. 3: schematisch in einer geschnittenen Seitenansicht die Ausführungsform nach Fig. 2 mit einer Rohrdurchführung,
- Fig. 4: schematisch in einer geschnittenen Seitenansicht die Ausführungsform nach Fig. 3 mit einem zusätzlichen Klemmmittel,
- Fig. 5: schematisch in einer geschnittenen Seitenansicht eine Ausführungsform einer Abdichtungsmatte mit mehreren Stegen nach Fig. 8,
- Fig. 6: schematisch in einer geschnittenen Seitenansicht ein Detail B der Fig. 5,
- Fig. 7: schematisch in einer geschnittenen Seitenansicht ein Detail C der Fig. 6,
- Fig. 8: schematisch in einer Draufsicht eine Ausführung einer Abdichtungsmatte mit Schnittlinie A-A (siehe Fig. 5),
- Fig. 9: schematisch in einer Seitenansicht eine Ausführungsform einer Abdichtungsmatte mit mehreren in axialer Richtung kontinuierlich angeordneten Stegen,
- Fig. 10: schematisch in einer Seitenansicht eine Ausführungsform einer Abdichtungsmatte mit mehreren in axialer Richtung diskret angeordneten Stegen und
- Fig. 11: schematich in einer Seitenansicht eine andere Ausführungsform einer Abdichtungsmatte mit mehrere in axialer Richtung diskret angeordneten Stegen.

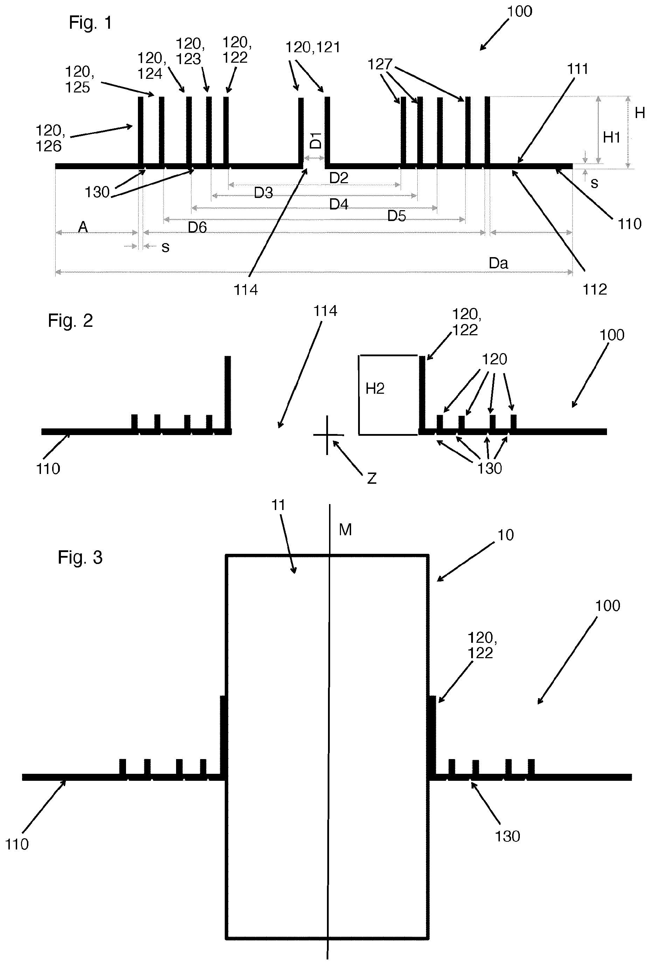

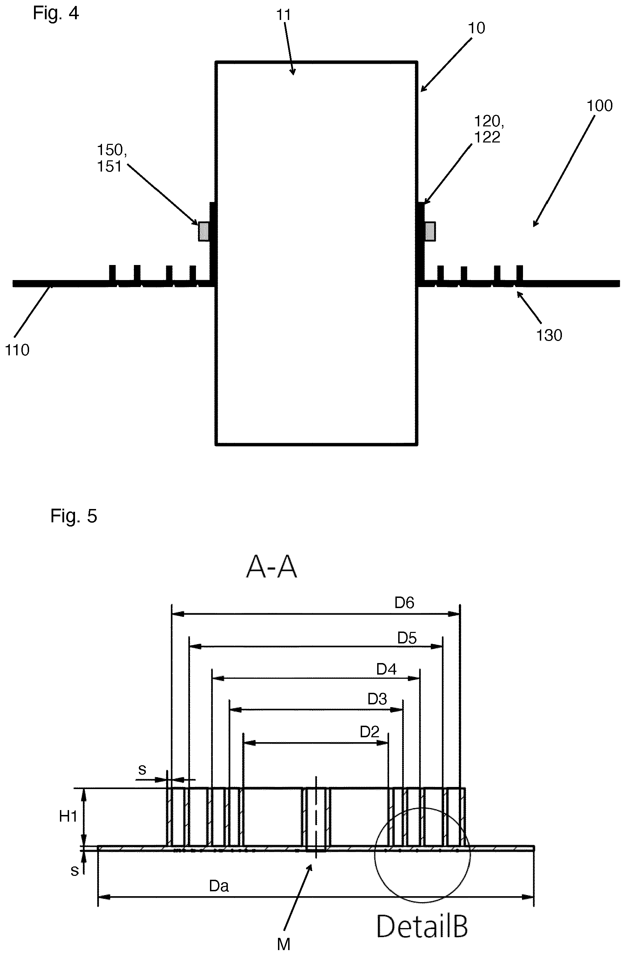

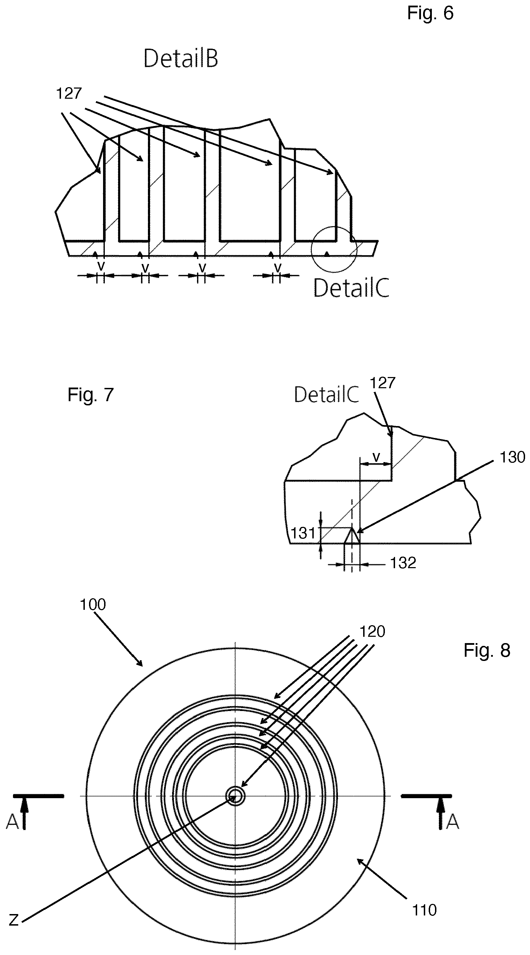

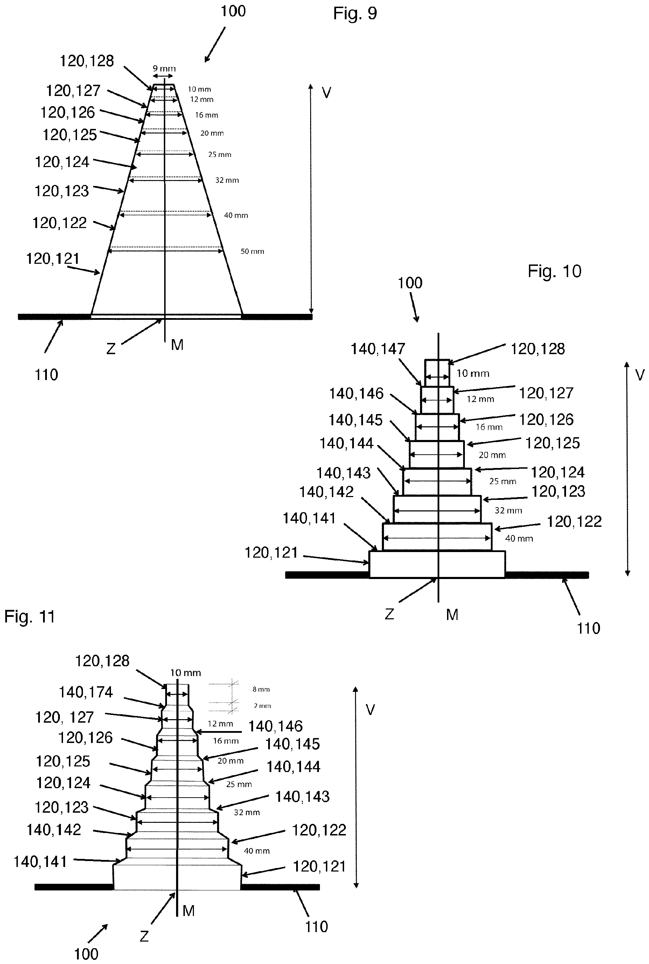

Die Fig. 1 bis 11 zeigen in verschiedenen Ansichten und verschiedenen Detaillierungsgraden verschiedene Ausführungsbeispiele einer erfindungsgemäßen Abdichtungsmatte 100 für eine Rohrdurchführung 10. Fig. 1 zeigt schematisch in einer geschnittenen Seitenansicht eine Ausführungsform einer Abdichtungsmatte 100 mit mehreren Stegen 120. Fig. 2 zeigt schematisch in einer geschnittenen Seitenansicht eine andere Ausführungsform einer Abdichtungsmatte 100 mit mehreren Stegen 100. Fig. 3 zeigt schematisch in einer geschnittenen Seitenansicht die Ausführungsform nach Fig. 2 mit einer (Rohr-)Durchführung 10. Fig. 4 zeigt schematisch in einer geschnittenen Seitenansicht die Ausführungsform nach Fig. 3 mit einem zusätzlichen Klemmmittel 150. Fig. 5 zeigt schematisch in einer geschnittenen Seitenansicht eine Ausführungsform einer Abdichtungsmatte 100 mit mehreren Stegen 120 nach Fig. 8. Fig. 6 zeigt schematisch in einer geschnittenen Seitenansicht ein Detail B der Fig. 5. Fig. 7 zeigt schematisch in einer geschnittenen Seitenansicht ein Detail C der Fig. 6. Fig. 8 zeigt schematisch in einer Draufsicht eine Ausführung einer Abdichtungsmatte 100 mit Schnittlinie A-A (siehe Fig. 5). Fig. 9 zeigt schematisch in einer Seitenansicht eine Ausführungsform einer Abdichtungsmatte 100 mit mehreren in axialer Richtung V kontinuierlich angeordneten Stegen 120. Fig. 10 zeigt schematisch in einer Seitenansicht eine Ausführungsform einer Abdichtungsmatte 100 mit mehreren in axialer Richtung V diskret angeordneten Stegen 120. Fig. 11 zeigt schematich in einer Seitenansicht eine andere Ausführungsform einer Abdichtungsmatte 100 mit mehrere in axialer Richtung V diskret angeordneten Stegen 120.

Die Abdichtungsmatte 100 ist als einteilige Matte aus einem elastischen und/oder quellfähigen Abdichtungsmaterial wie einem Silikonmaterial, einem Gummimaterial oder dergleichen ausgebildet. Die Matte 100 weist einen Basiskörper 110 auf. Von einer Oberseite 111 des Basiskörpers 110 ragen schräg, hier senkrecht, Dichtungsvorsprünge, Dichtungsanformungen oder Dichtungstege 120 ab (im Folgenden Stege 120). Die Stege 120 sind einteilig mit dem Basiskörper 110 verbunden. Der Basiskörper 110 weist in der dargestellten Ausführungsform eine konstante Materialstärke s auf. Die Materialstärke s beträgt beispielsweise 2 mm. Vorliegend ist der Basiskörper 110 als flache Kreisscheibe oder Ringscheibe 113 ausgebildet. Mittig weist der Basiskörper eine Durchgangsöffnung 114 auf. Durch die Durchgangsöffnung 114 wird bei Verwendung als Abdichtung für eine Durchführung ein Rohr oder dergleichen durchgeführt. Die Durchgangsöffnung 114 kann entsprechend an das durchzuführende Rohr verändert werden. In der dargestellten Ausführungsform ist die Durchgangsöffnung 114 zylindrisch ausgebildet mit einem Durchmesser D1. Umgeben ist der Bereich der Durchgangsöffnung mit einem ersten Steg 121. Der Steg 121 ist wie die anderen Stege 120 als konzentrischer Ring ausgebildet, der um das Zentrum Z das Basiskörpers 110 verläuft. Der Steg 121 ragt mit einer Höhe H1 von dem Basiskörper ab. Die Höhe H1 beträgt beispielsweise 25 mm. Die Stege 120 weisen eine konstante Materialstärke auf. Die Materialstärke liegt vorzugsweise in dem Bereich der Materialstärke des Basiskörpers, beispielsweise bei 2 mm. Der Innendurchmesser des Stegs 121 entspricht etwa dem Durchmesser D1 der Durchgangsöffnung.

Von dem Basiskörper 110 ragen mehrere Stege 120 ab. Dabei sind die Stege 120 zueinander und/oder zu einer durch ein Zentrum Z verlaufenden Mittelachse M, die senkrecht zu dem Basiskörper 110 ausgerichtet ist, teilweise radial unterschiedlich beabstandet. Die Stege 120 sind so beabstandet, dass deren Abstand dem Durchmesser der verschiedenen durchzuführenden Rohre 11 entspricht.

Die Stege 120 können, wie in Fig. 1 bis 8 dargestellt, in einer Ebene des Basiskörpers 110 radial zu der Mittelachse M radial beabstandet sein. In einer anderen Ausführungsform sind die Stege 120 in axialer Richtung V radial unterschiedlich zu der Mittelachse M beabstandet.

Entsprechend weist ein als konzentrisch ausgebildeter zweiter Steg 122 für das Ausführungsbeispiel nach Fig. 1 bis 8 einen Innendurchmesser D2 auf, der zum Beispiel im Bereich von 63 mm liegt. Ein als konzentrisch ausgebildeter dritter Steg 123 weist einen Innendurchmesser D3 auf, der zum Beispiel im Bereich von 75 mm liegt. Ein als konzentrisch ausgebildeter vierter Steg 124 weist einen Innendurchmesser D4 auf, der zum Beispiel im Bereich von 90 mm liegt. Ein als konzentrisch ausgebildeter fünfter Steg 125 weist einen Innendurchmesser D5 auf, der zum Beispiel im Bereich von 110 mm liegt. Ein als konzentrisch ausgebildeter sechster Steg 126 weist einen Innendurchmesser D6 auf, der zum Beispiel im Bereich von 125 mm liegt.

Die Stege 120 sind beabstandet zu dem äußeren Rand des Basiskörpers 110 angeordnet, so dass der Basiskörper 110 gegenüber dem äußersten Stege 120 einen Überstand A aufweist. Der Überstand A beträgt beispielsweise 30 mm, gemessen von einer Außenwandung des äußersten Stegs 120. Der Durchmesser des Basiskörpers Da beträgt so beispielsweise 189 mm. Die Gesamthöhe H der Abdichtungsmatte 100, gemessen von einer Unterseite 112 des Basiskörpers 110 bis zum oberen Ende des längsten Stegs 120 beträgt beispielsweise dann 27 mm.

An der Unterseite des Basiskörpers 110 sind Einkerbungen 130 vorgesehen. Die Einkerbungen 130 sind jeweils benachbart zu einer Fortsetzung des entsprechenden Stegs 120, genauer dessen Innenwandung 129 vorgesehen. Dabei sind die Einkerbungen leicht nach innen hin zum Zentrum Z zu der korrespondierenden Innenwandung 129 versetzt.

Das Material der Abdichtungsmatte ist schneidbar ausgebildet. Um verschiedene Rohrdurchführungen 10 abzudichten, wird der Basiskörper 110 entlang des Stegs 120 durchgeschnitten, der zu dem gewünschten Durchmesser oder der gewünschten Abmessung des Rohrs 11 korrespondiert. In Fig. 2 ist die Abdichtungsmatte 100 dargestellt, die für eine Rohr 11 angepasst ist, dessen Durchmesser zu dem fünften Steg gezählt von außen korrespondiert (Durchmesser etwa 63 mm). Entlang der korrespondierenden Wandung ist der Basiskörper 110 durchtrennt. Entsprechend weist die Durchgangsöffnung 114 einen zu dem Rohr 11 korrespondierenden Durchmesser auf. Der Teil des Basiskörpers 110 mit näher zum Zentrum Z liegenden Stegen 120 ist nicht mehr vorhanden.

Die in Fig. 2 dargestellte Ausführungsform weist zudem Stege 120 auf, die unterschiedliche Höhen aufweisen. Der innerster Steg 122 weist eine Höhe H2 auf, die in etwa der Höhe H1 aus dem Ausführungsbeispiel nach Fig. 1 entspricht. Die Höhen der restlichen Stege 120 ist dagegen kürzer ausgebildet. Ursprünglich waren die Höhen der restlichen Stege 120 gleich hoch wie die Höhe H2 des innersten Stegs 122. Für eine verbesserte Handhabung wurden die äußeren Stege 120 jedoch gekürzt. Auch die Stege 120 sind somit schneidbar ausgebildet.

In Fig. 3 ist eine Ausführungsform mit Rohrdurchführung 10 dargestellt. Hierbei ragt ein Rohr 11 durch eine Durchgangsöffnung 114 durch die Abdichtungsmatte 100, genauer den Basiskörper 110. Das Rohr 11 weist in etwa einen Außendurchmesser auf, der zu dem Innendurchmesser des benachbarten Stegs 120 korrespondiert. Die Innenwandung des zu dem Rohr 10 benachbarten Stegs 122 liegt an dem Rohr 10 an und dichtet dieses somit ab. Die Abdichtungswirkung lässt sich durch Vorsehen von Klemmmitteln 150 erhöhen.

Fig. 4 zeigt die Ausführungsform nach Fig. 4 mit zusätzlichem Klemmmittel 150. Das Klemmmittel 150 ist in der Fig. 4 als montierter Spannring 151, beispielsweise als Schlauchschelle, Kunststoffspannring oder ähnliches ausgebildet.

Fig. 5 zeigt die Abdichtungsmatte 100 in der ursprünglichen Form nach Fig. 1 entlang einer Schnittlinie A-A (siehe Fig. 8). Eingezeichnet ist der Bereich für die Fig. 6, welche den eingekreisten Bereich B im Detail zeigt.

Fig. 6 zeigt die Detailansicht B. Hier ist die Anordnung der jeweiligen Einkerbung 130 in Bezug zu dem korrespondierenden Steg 120 dargestellt. Zu jedem Steg 120 ist in Fortsetzung zu dessen Innenwandung 129 an der Unterseite 112 des Basiskörpers 110 eine Einkerbung 130 ausgebildet. Die jeweilige Einkerbung 130 ist leicht um einen Versatz v versetzt zu der Fortführung der Innenwandung 129 angeordnet. Die genaue Ausbildung der jeweiligen Einkerbung 130 ist als Detail C in Fig. 7 deutlicher zu erkennen.

Fig. 7 zeigt im Detail die Ausbildung der Einkerbung 130. Die Einkerbung 130 ist im Schnitt von der Unterseite 112 in Richtung Oberseite 111 spitz zulaufend ausgebildet. Dabei ist die die Einkerbung 130 im Querschnitt etwa dreieckig ausgeführt. An der Unterseite 112 beträgt der Versatz v zu der Fortführung der Innenwandung 129 beispielsweise 1 mm. Eine Breite 132 der Einkerbung 130 beträgt an der breitesten Stelle beispielsweise 0,5 mm. Eine Tiefe 131 der Einkerbung 130 beträgt beispielsweise 0,5 mm.

In Fig. 8 ist die Abdichtungsmatte 100 in dem ursprünglichen Zustand, das heißt vor Abschneiden von Teilen der Abdichtungsmatte 100, in einer Draufsicht zu sehen. Hier ist deutlich die Ausführung der Stege 120 als konzentrische Ringe um das Zentrum Z dargestellt.

Fig. 9 bis 11 zeigen drei Ausführungsbeispiele einer Abdichtungsmatte 100, bei denen die Stege 120 nicht in der Ebene des Basiskörpers 110 direkt an dem Basiskörper 110 angeordnet sind, sondern in axialer Richtung V Steg 120 an Steg 120 radial beabstandet zu der axialen Mittelachse M angeordnet sind. Hierbei ragt zunächst ein erster Steg 121 von dem Basiskörper 110 quer ab. An den ersten Steg 121 grenzt dann ein sich im radialen Abstand von der Mittelachse M sich verjüngender oder verjüngter Steg 122 an. Der jeweils benachbarte Steg 120 weist wiederum einen geringeren radialen Abstand zu der Mittelachse M auf. In dem Ausführungsbeispiel nach Fig. 9 sind die Stege 120 kontinuierlich aneinander angrenzend angeordnet. Dabei ragen die Stege 120 quer zu dem Basiskörper 110 ab, mit einem Winkel kleiner 90 Grad und größer 75 Grad, sodass sich in axialer Richtung V weg von dem Basiskörper 110 der radiale Abstand zu der Mittelachse M abnimmt. In Fig. 10 und 11 ragen die Stege 120 in einem rechten Winkel von dem Basiskörper 110 ab. Um den mit steigender axialer Entfernung von dem Basiskörper 110 abnehmenden Abstand zu realisieren, sind Zwischenabschnitte 140 zwischen den einzelnen Stegen 120 vorgesehen. Die Zwischenabschnitte 140 verlaufen in der in Fig. 10 dargestellten Ausführungsform senkrecht zu den jeweiligen Stegen 120. In der in Fig. 11 dargestellten Ausführungsform verlaufen die Zwischenabschnitte 140 schräg von einem Steg 120 zum benachbarten Steg 120, sodass die benachbarten Stege 120 nicht nur einen unterschiedlichen radialen Abstand zu der Mittelachse M aufweisen, sondern auch in axialer Richtung V einen Versatz aufweisen.

In dem Ausführungsbeispiel nach Fig. 9 liegt der jeweilige Steg 120 somit nicht in seiner gesamten Länge mit seiner Innenseite an einem durchgeführten Rohr 11 an, sondern nur mit einem in axialer Richtung V kürzeren Abschnitt. Dargestellt sind die entsprechenden Abschnitte mit den jeweiligen Pfeilen. Beispielhaft daneben sind verschiedene Maße für Außendurchmesser von durchzuführenden Rohren 11 dargestellt. Die gestrichelten Linien stellen jeweils eine gedachte Grenze zwischen zwei benachbarten Stegen 120 dar.

Fig. 10 und 11 zeigen ebenfalls die verschiedenen Rohrdurchmesser gemäß Fig. 9 beispielhaft dar. Hier entspricht der radiale Abstand der Stege 120 zu der Mittelachse M dem entsprechenden Rohraußendurchmesser (bzw. der Hälfte des Rohraußendurchmessers). Der jeweilige Steg 120 liegt hier mit seiner gesamten Innenseite an einer Außenseite des durchgeführten Rohrs 11 an. In Fig. 11 sind die benachbarten Stege axial zueinander um einen Versatz zueinander beabstandet. Beispielhaft ist eine axiale Länge eines Stegs 120 (8 mm) und ein axiale Länge eines Versatzes (2 mm) angegeben.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

**Bezugszeichenliste**

| | | | |
|---|---|---|---|
| 10 | (Rohr-)Durchführung | A | Überstand (Basiskörper) |
| 11 | Rohr | D1 | Durchmesser (Durchgangsöffnung) |
| 100 | Abdichtungsmatte | D2 | Durchmesser (zweiter Steg) |
| 110 | Basiskörper | D3 | Durchmesser (dritter Steg) |
| 111 | Oberseite (Basiskörper) | D4 | Durchmesser (vierter Steg) |
| 112 | Unterseite (Basiskörper) | D5 | Durchmesser (fünfter Steg) |
| 113 | Kreis-/Ringscheibe | D6 | Durchmesser (sechster Steg) |
| 114 | Durchgangsöffnung | Da | Durchmesser (Basiskörper) |
| 120 | Vorsprung / Anformung / Steg | H | Höhe (Abdichtungsmatte) |
| 121 | Steg (erster) | H1 | Höhe (Steg) |
| 122 | Steg (zweiter) | H2 | Höhe (Steg) |
| 123 | Steg (dritter) | M | Mittelachse |
| 124 | Steg (vierter) | s | Materialstärke |
| 125 | Steg (fünfter) | V | Axiale Richtung |
| 126 | Steg (sechster) | v | Versatz (Einkerbung) |
| 127 | Steg (siebter) | Z | Zentrum |
| 128 | Steg (achter) | | |
| 129 | Innenwandung (Steg) | | |
| 130 | Einkerbung | | |
| 131 | Tiefe (Einkerbung) | | |
| 132 | Breite (Einkerbung) | | |
| 140 | Zwischen-/Übergangsabschnitt | | |
| 141 | erster Zwischenabschnitt | | |
| 142 | erster Zwischenabschnitt | | |
| 143 | erster Zwischenabschnitt | | |
| 144 | erster Zwischenabschnitt | | |
| 145 | erster Zwischenabschnitt | | |
| 146 | erster Zwischenabschnitt | | |
| 147 | erster Zwischenabschnitt | | |
| 150 | Klemmmittel | | |
| 151 | Spannring | | |

## Patentansprüche

1. Abdichtungsmatte (100) zur Abdichtung einer Durchführung (10), insbesondere zur Abdichtung einer Rohrdurchführung (10), umfassend einen flächigen Basiskörper (110), der sich über eine Basisebene erstreckt, mit einer Oberseite (111) und einer Unterseite (112), wobei zumindest von einer der beiden Seiten quer zu der Basisebene Dichtungsvorsprünge oder Dichtungsstege (120) abragen, wobei die Dichtungsvorsprünge oder Dichtungsstege (120) zu einer durch ein Zentrum (Z) der Basisebene bzw. des Basiskörpers senkrecht abragenden Mittellinie (M) radial unterschiedlich beabstandet sind, sodass zwischen den Dichtungsvorsprüngen oder Dichtungsstegen (120) eine Durchführung (10) abdichtend aufnehmbar ist.

2. Abdichtungsmatte (100) nach Anspruch 1, **dadurch gekennzeichnet,**
**dass**
die Dichtungsvorsprünge oder Dichtungsstege (120) und der Basiskörper (110) zumindest teilweise einteilig oder zumindest teilweise mehrteilig miteinander ausgebildet sind.

3. Abdichtungsmatte (100) nach Anspruch 1 oder 2, **dadurch**
**gekennzeichnet, dass**
der Basiskörper (110) scheibenartig ausgebildet ist.

4. Abdichtungsmatte (100) nach einem der vorherigen Ansprüche 1 bis 3,
**dadurch gekennzeichnet, dass**
der scheibenartige Basiskörper (110) als Kreisscheibe (113) ausgebildet ist mit einem in der Draufsicht kreisförmigen Querschnitt.

5. Abdichtungsmatte (100) nach einem der vorherigen Ansprüche 1 bis 4,
**dadurch gekennzeichnet, dass**
die Dichtungsvorsprünge oder die Dichtungsstege (120) umlaufend um das Zentrum (Z) des Basiskörpers (110) ausgebildet sind, so dass diese in einer Draufsicht ringartig oder als konzentrische Ringe ausgebildet sind.

6. Abdichtungsmatte (100) nach einem der vorherigen Ansprüche 1 bis 5,
**dadurch gekennzeichnet, dass**
auf einer der Seite mit den abragenden Dichtungsvorsprüngen oder Dichtungsstegen (120) gegenüberliegenden Seite und/oder der Innenseite oder Außenseite der Dichtungsvorsprünge oder Dichtungsstege Hilfsmittel für das Herstellen einer Durchgangsöffnung oder Aussparung wie Einkerbungen, Materialverdünnungen und/oder Ausnehmungen (130) vorgesehen sind.

7. Abgedichtete Rohrdurchführung (10), umfassend ein Rohr (11) und eine Abdichtungsmatte (100), wobei die Abdichtungsmatte (100) nach einem der vorherigen Ansprüche ausgebildet ist, wobei der Basiskörper (110) der Abdichtungsmatte (100) zur Durchführung des Rohrs (11) eine Aussparung oder Durchgangsöffnung (114) entlang einer der Dichtungsvorsprünge oder Dichtungsstege (120) aufweist, und das Rohr (11) seitlich an einen Dichtungsvorsprung oder einen Dichtungssteg (120) angrenzend den Basiskörper (110) durchdringt.

8. Abgedichtete Rohrdurchführung nach Anspruch 7, **dadurch gekennzeichnet, dass**
die Abdichtungsmatte (100) zu dem durchgeführten Rohr (11) fixiert ist.

9. Verfahren zur Abdichtung einer Durchführung (10), insbesondere zur Abdichtung einer Rohrdurchführung (10), umfassend die Schritte: Bereitstellen einer Abdichtungsmatte (100) nach einem der vorherigen Ansprüche 1 bis 6, Vorsehen einer Aussparung oder Durchgangsöffnung (114) entlang eines Dichtungsvorsprungs oder Dichtungsstegs (120), um so einen Durchlass für die Rohrdurchführung (10) zu realisieren, Durchführen eines Rohres (11) durch die Aussparung oder die Durchgangsöffnung (114), wobei das Rohr (11) mit seiner Außenwandung entlang des Dichtungsvorsprungs oder des Dichtungsstegs (120), entlang dem die Aussparung / Durchgangsöffnung (114) gebildet wird, angrenzt, sodass das Rohr (11) von dem entsprechenden Dichtungsvorsprung oder Dichtungssteg (120) abgedichtet ist.

10. Verfahren nach Anspruch 9, **dadurch gekennzeichnet, dass** die Abdichtungsmatte (100) fixiert wird.
